# EUROPÄISCHE PATENTSCHRIFT

(11) **EP 4 094 929 B1**
(45) Veröffentlichungstag und Bekanntmachung des Hinweises auf die Patenterteilung: **12.06.2024**
(21) Anmeldenummer: 22171077.5
(22) Anmeldetag: 02.05.2022
(51) Int. Cl.: B29C 70/48, B29C 70/02, B29C 70/52, B29B 7/08, B29B 7/16, B29B 7/28, B29B 7/90

(54) **VERFAHREN ZUM HERSTELLEN EINES FASERVERSTÄRKTEN KUNSTSTOFFPRODUKTES SOWIE ANLAGE DAFÜR**
METHOD FOR MANUFACTURING A FIBRE-REINFORCED PLASTIC PRODUCT AND ASSEMBLY FOR SAME
PROCÉDÉ DE FABRICATION D'UN PRODUIT EN MATIÈRE PLASTIQUE RENFORCÉ PAR DES FIBRES, AINSI QU'INSTALLATION CORRESPONDANTE

(30) Priorität: 14.05.2021 DE 102021112544
(43) Veröffentlichungstag der Anmeldung: 30.11.2022
(73) Patentinhaber: Otto Fuchs - Kommanditgesellschaft -, 58540 Meinerzhagen (DE); Fraunhofer-Gesellschaft zur Förderung der angewandten Forschung e.V., 80686 München (DE)
(72) Erfinder: WILHELM, Frederik, 89079 Ulm (DE); RIEGER, Maximilian, 81667 München (DE); WADDINGTON, Bryony, 51709 Marienheide (DE); WALKER, Peter, 58540 Meinerzhagen (DE)
(74) Vertreter: Haverkamp Patentanwälte PartG mbB

(56) Entgegenhaltungen:
- CN-A- 101 376 736
- CN-A- 111 531 918
- US-A- 5 114 633

## Beschreibung

Die Erfindung betrifft ein Verfahren zum Herstellen eines faserverstärkten Kunststoffproduktes gemäß den Merkmalen des Anspruchs 1.

Ferner betrifft die Erfindung eine Anlage zum Herstellen eines faserverstärkten Kunststoffproduktes gemäß den Merkmalen des Anspruchs 8.

Verfahren und Anlagen zum Herstellen eines faserverstärkten Kunststoffproduktes sind in unterschiedlichen Ausgestaltungen bekannt. Gemäß einer Möglichkeit, derartige Kunststoffprodukte herzustellen, wird eine aus Fasern gebildete Vorform, beispielsweise als Vlies gewirkt, in eine Kavität eines Formwerkzeuges eingelegt. Anschließend wird ein fließfähiges Harz in die Kavität injiziert. In der Kavität wird die Vorform durch das eingespritzte Harz mit diesem getränkt und die Kavität gefüllt. Nach Aushärten des Harzes wird das Formwerkzeug geöffnet und das faserverstärkte Kunststoffprodukt kann dem Formwerkzeug entnommen werden. Faserverstärkte Kunststoffprodukte können, wie vorstehend beschrieben, batchweise oder auch in einem kontinuierlichen Herstellprozess hergestellt werden. Im letzteren Fall wird die Vorform durch das Formwerkzeug hindurchgezogen und während des Hindurchziehens durch das Formwerkzeug wird das fließfähige Harz zum Imprägnieren der Vorform in die Kavität eingespritzt. Dieses Verfahren bezeichnet man auch als Pultrusion (Strangziehen). Ein solches Verfahren ist in CN 101 376 736 A beschrieben.

Mitunter werden dem Harz Füllstoffpartikel beigemengt, beispielsweise Kreide, wie dieses für die Herstellung von Kunststoffprodukten üblich ist, oder auch thermoplastische Kunststoffpartikel, letzteres beispielsweise um die Schlagfestigkeit des mit dem Harz urgeformten Kunststoffproduktes zu erhöhen. Vor dem Injizieren des Füllstoffpartikel-Harz-Gemisches werden die Füllstoffpartikel mit dem Harz vermengt. Hierbei versucht man, die Füllstoffpartikel soweit wie möglich homogen mit dem Harz zu vermischen, um auf diese Weise ein fließfähiges, injizierbares Füllstoffpartikel-Harz-Gemisch mit homogenen Eigenschaften zu erzeugen.

Es gibt Anwendungen für derartige faserverstärkte Kunststoffprodukte, bei denen diese elektrisch leitfähig oder zumindest antistatisch sein sollen. Dies ist beispielsweise bei fluidführenden Leitungen für hochenergetische Flüssigkeiten, insbesondere für Leichtbauanwendungen, der Fall. Dieses impliziert, dass über die Erstreckung des faserverstärkten Kunststoffproduktes die elektrische Leitfähigkeit gleich oder zumindest weitestgehend gleich ist. Daher ist Sorge dafür zu tragen, dass in dem fertigen Produkt in dem ausgehärteten Harz die Füllstoffpartikel nicht nur homogen verteilt sind, sondern auch in einer ausreichenden Menge vorhanden sind, um die elektrische Leitfähigkeit oder antistatische Eigenschaften zu gewährleisten. Problematisch bei elektrische leitfähigen Partikeln sind im Unterschied zu anderen Füllstoffpartikeln deutlich höhere intermolekulare Anziehungskräfte (sogenannten sekundäre Bindungskräfte), wodurch es zu schwer aufbrechbaren (Re-)Agglomerationen innerhalbe kurzer Zeit kommt, so dass eine homogene Verteilung erschwert wird. Um antistatische Eigenschaften des faserverstärkten Kunststoffproduktes zu erreichen, wird nur eine relativ geringe Menge an Füllstoffen benötigt, durchaus weniger als 5 Gew.-%.

Aktuell werden beispielsweise Nasswickelverfahren eingesetzt, um antistatische, faserverstärkte Kunststoffprodukte herzustellen. Bei dem Nasswickelverfahren werden die Fasern durch ein Harz-Imprägnierbad gezogen, bevor diese unmittelbar anschließend auf einen Wickeldorn aufgewickelt werden. Mithin können mit diesem Verfahren nur sehr eingeschränkt faserverstärkte Kunststoffprodukte hergestellt werden. Allerdings hat dieses Verfahren zum Vorteil, dass die durch das Harz-Imprägnierbad hindurchgezogenen Fasern gleichmäßig mit Harz und den darin enthaltenen elektrisch leitenden Füllstoffpartikeln imprägniert werden, sodass über die Erstreckung des Kunststoffproduktes mit einer homogenen elektrischen Leitfähigkeit gerechnet werden kann. Nachteilig ist bei diesem Verfahren die nur sehr eingeschränkte Faserarchitektur bei der Vorform und daher, dass komplexere Faserarchitekturen, wie diese ansonsten für Vorformen, beispielsweise zum Herstellen eines Rohres, verwendet werden, nicht eingesetzt werden können. Dadurch ist auch die Bandbreite der mit diesem Verfahren herzustellenden Produkte beschränkt. Bei diesem Verfahren werden auch erhöhte Anforderungen an die Harzaufbereitung gestellt, da das Harz-Imprägnierbad batchweise bereitgestellt wird und daher zu gewährleisten ist, dass die Füllstoffpartikel-Harz-Gemisch-Chargen, die in das Harz-Imprägnierbad eingefüllt werden, denselben Füllstoffpartikelgehalt und eine gleiche homogene Verteilung derselben aufweisen müssen, um die gleichbleibenden elektrischen Eigenschaften in dem Kunststoffprodukt zu erhalten.

Vorbekannt ist auch, faserverstärkte Kunststoffprodukte durch Harzinjektionsverfahren (zum Beispiel mit Resin Transfer Moulding) herzustellen. Bei diesem Verfahren können komplexere Faserarchitekturen als Vorformen verwendet werden. Bekannt ist ein solches Verfahren beispielsweise aus CN 111531918 A. Nachteilig bei diesem Verfahren und entsprechenden Anlagen sind die in der Kavität zurückzulegenden Fließwege des Harzes. Beim Einspritzen des Harzes in eine solche Kavität, wobei das Harz durchaus an unterschiedlichen Injektionspunkten in die Kavität eingespritzt wird, filtern die Fasern der Vorform die Füllstoffpartikel aus dem Harz, sodass das ausgehärtete Kunststoffprodukt keine homogene Verteilung der Füllstoffpartikel aufweist. Dieser Effekt ist bei Verwendung beispielsweise von Thermoplast-Partikeln als Füllstoff unerheblich, da die die Schlagfestigkeit erhöhenden Füllstoffpartikel dann an die Außenseite des Kunststoffproduktes, und zwar an derjenigen Seite, an der die Injektionspunkte angeordnet sind, zu einem größeren Anteil verbleiben. Für derartige Füllstoffpartikel scheint der Filtrationseffekt sogar förderlich zu sein. Anders stellt sich dieses jedoch dar, wenn als Füllstoffpartikel elektrisch leitende Partikel eingesetzt werden, da durch die Filtration Inhomogenitäten in der elektrischen Leitfähigkeit zwangsläufig die Folge sind.

Im Zusammenhang mit der Herstellung eines faserverstärkten Kunststoffproduktes, der eine gewisse elektrische Leitfähigkeit aufweisen soll, ist zu beachten, dass bereits geringe Inhomogenitäten in der Gleichverteilung der elektrisch leitenden Füllstoffpartikel in dem Harz für eine nicht konstante Leitfähigkeit innerhalb des Kunststoffproduktes sorgen. Ist der Füllstoffpartikelanteil zu gering, kann die Leitfähigkeit sogar unterbrochen werden. Befinden sich an einigen Stellen zu viele elektrisch leitende Füllstoffpartikel, kann dieses im Falle einer Nutzung der elektrischen Leitfähigkeit zu einer lokalen Überhitzung führen. Füllstoffpartikelansammlungen haben ferner zum Nachteil, dass in diesen Bereichen weniger Harz als Bindemittel vorhanden ist, sodass derartige Zonen innerhalb des Kunststoffproduktes weniger belastbar sind.

Ausgehend von diesem diskutierten Stand der Technik liegt der Erfindung die Aufgabe zugrunde, ein eingangs genanntes Verfahren sowie eine eingangs genannte Anlage in Bezug auf die vorstehend angesprochenen Nachteile der vorbekannten Verfahren und Anlagen zu verbessern.

Gelöst wird diese Aufgabe durch ein Verfahren mit den Merkmalen des Anspruchs 1 sowie durch eine Anlage zum Herstellen eines faserverstärkten Kunststoffproduktes mit den Merkmalen des Anspruchs 9.

### Die Füllstoffpartikel-Harz-Gemisch Aufbereitung

Um den Anforderungen an einen sehr hohen Grad an Homogenisierung und Dispergierung der Füllstoffpartikel in dem Harz zu genügen, ist als Verbesserung vorgesehen, dass zum Bereitstellen des Füllstoffpartikel-Harz-Gemisches eine Aufbereitung von in einem fließfähigen Harz befindlichen Füllstoffpartikeln mit Energiezufuhr erfolgt, bei der die Füllstoffpartikel in dem fließfähigen Harz mit einem Scherkräfte einbringenden, mechanischen Rührwerkzeug zur Homogenisierung und Dispergierung der Füllstoffpartikel in dem Harz gemischt werden und zusätzlich das Füllstoffpartikel-Harz-Gemisch zur Feindispergierung mit Ultraschall beschallt wird.

Bei diesem Verfahren - gleiches gilt für die beanspruchte Anlage - erfolgt eine Aufbereitung des fließfähigen Füllstoffpartikel-Harz-Gemisches durch Mischen der Ingredienzien - Füllstoffpartikel und fließfähiges Harz - durch zwei miteinander kombinierte Prozesse. Zum einen wird ein mechanisches Rührwerkzeug verwendet, welches in einem Aufbereitungsbehälter die in das fließfähige Harz eingebrachten Füllstoffpartikel darin vermischt. Dieses erfolgt mit einem gewissen Energieeintrag. Dieser sorgt für die erforderliche Homogenisierung und Dispergierung der Füllstoffpartikel in dem Harz. Derartige Rührwerkzeuge sind beispielsweise als Flügelrührwerkzeuge bekannt. Von Besonderheit bei dieser Füllstoffpartikel-Harz-Gemisch Aufbereitung ist jedoch, dass zusätzlich das Füllstoffpartikel-Harz-Gemisch zur Feindispergierung und somit zur Exfoliation der Füllstoffpartikel mit Ultraschall beschallt wird. Hierzu wird typischerweise nicht das gesamte Füllstoffpartikel-Harz-Gemisch dem Ultraschall ausgesetzt. Vielmehr wird es als ausreichend angesehen, wenn nur ein Teil, typischerweise sukzessive nur ein kleiner Anteil des Füllstoffpartikel-Harz-Gemisches dem Ultraschall ausgesetzt ist. Entsprechend geringer ist dann der apparative Aufwand. Durchaus möglich ist auch der Einsatz mehrerer Ultraschallsonotroden, die gemeinsam oder auch nacheinander arbeitend, dann typischerweise mit unterschiedlichen Schallfrequenzen betrieben werden. Vorzugsweise befindet sich der durch eine Ultraschallsonotrode beschallte Bereich innerhalb des Aufbereitungsbehälters in dem Bereich der Ausgabe bzw. der Ausgabeöffnung, aus der das homogenisierte Füllstoffpartikel-Harz-Gemisch aus dem Aufbereitungsbehälter ausgegeben bzw. abgezogen wird. Dieses fließt beim Abziehen von Füllstoffpartikel-Harz-Gemisch aus dem Aufbereitungsbehälter sodann durch den durch die Ultraschallsonotrode beschallten Bereich vorbei mit dem Effekt, dass unter Umständen noch vorhandene Füllstoffpartikelagglomerationen aufgelöst werden. Elektrisch leitfähige Füllstoffpartikel neigen trotz Dispergierung mit einem Rührwerkzeug zu Re-Agglomerationen, so dass auch diesem Effekt durch die vorbeschriebene Füllstoffpartikel-Harz-Gemisch-Aufbereitung entgegengewirkt wird. Durch die Beschallung werden zudem unter Umständen vorhandene Luftblasen aus der fließfähigen Masse ausgetrieben. Das Ergebnis dieser Aufbereitung ist ein Füllstoffpartikel-Harz-Gemisch, dessen Füllstoffpartikel einen besonders hohen Grad an Homogenisierung und Dispergierung in der fließfähigen Harzmasse haben, vor allem auch, wenn der Füllstoffpartikelgehalt, wie dieses typischerweise bei einem Einsatz von elektrisch leitenden Füllstoffpartikeln der Fall ist, relativ niedrig ist. Die eingesetzte Energie in die Aufbereitung ist durch die Kombination eines mechanischen Rührwerkes mit einer Ultraschallbeschallung besonders energieeffizient.

Eine gute Homogenisierung und Dispergierung der Füllstoffpartikel in dem Harz hat ferner zum Vorteil, dass auch längere Fließwege von der Aufbereitung zu dem oder den Injektionspunkten, in denen das Füllstoffpartikel-Harz-Gemisch in die Kavität des Formwerkzeuges injiziert wird, ebenso in Kauf genommen werden können wie zeitliche Unterbrechungen in der Zuführung des Füllstoffpartikel-Harz-Gemisches an das Formwerkzeug.

Das Verfahren zum Bereitstellen von homogenen, in der fließfähigen Harzmasse enthaltenen Füllstoffpartikeln kann in Bezug auf die beiden darin eingesetzten Verfahrensschritte, und zwar dem Homogenisieren und dem Dispergieren mittels eines mechanischen Rührwerkzeuges und die Durchführung einer Feindispersion mittels in die fließfähige Harzmasse eingebrachter Ultraschallenergie gleichzeitig durchgeführt werden. Vorzugsweise wird man den Prozessschritt des Einbringens von Ultraschall in die fließfähige Harzmasse erst starten, wenn durch das Rührwerkzeug bereits eine gewisse Homogenisierung und Dispergierung vorgenommen worden ist.

Eine Anlage, bei der die zumindest eine Ultraschallsonotrode den Bereich der Ausgabe, beispielsweise den vor der Eingangsöffnung einer Steigleitung befindlichen Bereich beschallt, kann dergestalt ausgelegt sein, dass das fließfähige Füllstoffpartikel-Harz-Gemisch abgezogen und an anderer Stelle wieder der übrigen Harzmasse im Aufbereitungsbehälter zugeführt wird. Auf diese Weise werden zwei Harzströme erzeugt, und zwar zum einen ein durch das Rührwerkzeug und zum anderen einen durch die Förderung eines kleinen Anteils davon durch die Ausgabewegsamkeit durch den von der zumindest einen Ultraschallsonotrode beschallten Bereich und dessen Rückführung in den Aufbereitungsbehälter erzeugter Harzstrom. Während von letzterem nur ein kleiner Füllstoffpartikel-Harz-Gemischbestandteil gefördert wird, wird durch das Rührwerkzeug das gesamte im Aufbereitungsbehälter befindliche Füllstoffpartikel-Harz-Gemisch bewegt.

Als Harzsysteme können beispielsweise Polyurethane, Epoxidharze, Vinylester und dergleichen verwendet werden.

Bei einem Einsatz von elektrisch leitfähigen Füllstoffpartikeln können jedwede Füllstoffpartikel eingesetzt werden, die den Anforderungen an die elektrische Leitfähigkeit genügen. Hierbei kann es sich um Kohlenstoffnanoröhren (Carbonnanotubes), Graphen, Graphitpartikel/Ruß, metallische Füllstoffpartikel oder dergleichen handeln.

### Qualitätskontrolle des Füllstoffpartikel-Harz-Gemisches

Eine Verbesserung des Standes der Technik gemäß dem Oberbegriff des Anspruchs 1 kann auch mit einem weiteren Aspekt erreicht werden, und zwar dadurch, dass die Qualität des Füllstoffpartikel-Harz-Gemisches in Bezug auf eine Gleichverteilung der Füllstoffpartikel in dem Füllestoffpartikel-Harz-Gemisch bei der Zufuhr desselben an das Formwerkzeug überwacht wird und dass bei Feststellen einer nicht hinreichenden Füllstoffpartikelgleichverteilung die Zufuhr des Füllstoffpartikel-Harz-Gemisches an das Formwerkzeug gestoppt oder unterbrochen wird. Mit einer solchen Kontrolle der Gleichverteilung der Füllstoffpartikel in dem Füllstoffpartikel-Harz-Gemisch erreicht werden. Eine solche Qualitätskontrolle des Füllstoffpartikel-Harz-Gemisches wird vorzugsweise im Anschluss an die Füllstoffpartikel-Harz-Gemisch Aufbereitung vorgenommen, beispielsweise in der Zuleitung, in der das Füllstoffpartikel-Harz-Gemisch dem oder den Injektionspunkten des Formwerkzeuges zugeführt wird. Durchgeführt wird eine solche Qualitätskontrolle, indem die Qualität des Füllstoffpartikel-Harz-Gemisches in Bezug auf eine Gleichverteilung der Füllstoffpartikel in dem fließfähigen Füllstoffpartikel-Harz-Gemisch bei der Zufuhr desselben an das Formwerkzeug überwacht wird und bei Feststellen einer nicht hinreichenden Füllstoffpartikelgleichverteilung die Zufuhr des Füllstoffpartikel-Harz-Gemisches an das Formwerkzeug gestoppt oder unterbrochen wird.

Die Überwachung der Qualität der Gleichverteilung der Füllstoffpartikel in dem Füllstoffpartikel-Harz-Gemisch erfolgt typischerweise kontinuierlich bzw. in einem vorgegebenen Takt, sodass auf diese Weise die Bereitstellung eines Füllstoffpartikel-Harz-Gemisches, welches den vorgegebenen Qualitätsanforderungen genügt, auch über die Zeit gewährleistet ist. Eine solche Qualitätskontrolle des Füllstoffpartikel-Harz-Gemisches eignet sich vor allem bei einer kontinuierlichen Füllstoffpartikel-Harz-Gemisch-Zufuhr an ein Formwerkzeug, wie dieses beispielsweise bei einem Pultrusion-Formwerkzeug der Fall ist. Die Qualitätskontrolle hat zum Ziel, dass bei Feststellen einer nicht hinreichenden Gleichverteilung der Füllstoffpartikel in dem Füllstoffpartikel-Harz-Gemisch die Zufuhr dieses Gemisches an das Formwerkzeug gestoppt bzw. unterbrochen wird. Dadurch ist sichergestellt, dass an das Formwerkzeug nur ein Füllstoffpartikel-Harz-Gemisch gefördert wird, welches den vordefinierten Qualitätsanforderungen entspricht.

Die Qualitätskontrolle kann anhand zumindest einer physikalischen Eigenschaft des Füllstoffpartikel-Harz-Gemisches durchgeführt werden, beispielsweise unter Ausnutzung der thermischen und/oder elektrischen Leitfähigkeit der fließfähigen Harzmasse. Möglich ist es auch, ergänzend oder anstelle dieser physikalischen Eigenschaft eine oder mehrere optische Eigenschaften des Füllstoffpartikel-Harz-Gemisches in Bezug auf eine Gleichverteilung der Füllstoffpartikel auszuwerten. Die Erfassung der einen oder der mehreren physikalischen Eigenschaften des Füllstoffpartikel-Harz-Gemisches kann über die Oberfläche des Füllstoffpartikel-Harz-Gemisch-Stroms ebenso erfolgen, wie über seinen Durchmesser. In einer bevorzugten Ausgestaltung wird diese Eigenschaft in beiden genannten Richtungen erfasst. Ausgenutzt wird hierbei, dass die thermische und elektrische Leitfähigkeit umso höher ist, je dichter die Füllstoffpartikel in dem Harz gepackt sind und umgekehrt.

Gemäß einer Ausgestaltung dieses Verfahrens und einer Auslegung einer solchen Anlage ist vorgesehen, dass bei Feststellen einer nicht hinreichenden Füllstoffpartikelgleichverteilung in dem Füllstoffpartikel-Harz-Gemisch ein den Anforderungen nicht genügendes Gemisch in die Aufbereitung zurückgeführt wird. Dieses ist dadurch möglich, dass die Kontrolleinrichtung in eine, beispielsweise durch ein Ventil aktivierbare, Rückführung zum Zurückführen von Füllstoffpartikel-Harz-Gemisch in den Aufbereitungsbehälter eingeschaltet ist. Durch eine solche Auslegung des Verfahrens bzw. einer solchen Anlage kann die durch die Rückführung gebildete Qualitätskontrollschleife auch genutzt werden, um kontinuierlich den Aufbereitungsfortschritt des Füllstoffpartikel-Harz-Gemisches in dem Aufbereitungsbehälter zu kontrollieren. Das Gemisch zirkuliert dann während des Aufbereitungsprozesses zum Mischen der Füllstoffpartikel mit dem Harz auch durch diese Kontrollschleife. Wird über die Kontrolleinrichtung festgestellt, dass über eine hinreichend lange Zeitdauer das Füllstoffpartikel-Harz-Gemisch eine hinreichende Gleichverteilung aufweist, wird die Rückführung in den Aufbereitungsbehälter geschlossen und das Füllstoff-Harz-Gemisch über eine entsprechende Zuleitung dem Formwerkzeug zugeführt.

Durchaus können auch zwei oder mehr Aufbereitungsbehälter verwendet werden, in denen jeweils ein Füllstoffpartikel-Harz-Gemisch mit den vorbeschriebenen Maßnahmen aufbereitet wird. Diese können in Strömungsrichtung des Gemisches der jeweiligen Qualitätskontrolleinrichtung nachgeschaltet in eine gemeinsame Zuführung zu dem einen oder auch den mehreren Formwerkzeugen eingespeist werden. Dieses erlaubt auch bei einer batchweisen Aufbereitung des Füllstoff-Harz-Gemisches eine kontinuierliche Versorgung eines Formwerkzeuges mit Füllstoffpartikel-Harz-Gemisch. Dieses kann beispielsweise zur Versorgung eines Pultrusion-Formwerkzeuges günstig sein.

### Injizieren des Füllstoffpartikel-Harz-Gemisches

Eine weitere Verbesserung der aus dem Stand der Technik gemäß dem Oberbegriff des Anspruchs 1 bekannten Verfahren und Anlagen lässt sich dadurch erreichen, dass das Füllstoffpartikel-Harz-Gemisch an mehrere Injektionspunkte des Formwerkzeuges gefördert wird und dass die Injektionspunkte des Formwerkzeuges taktweise mit Füllstoffpartikel-Harz-Gemisch beaufschlagt werden dergestalt, dass diese nicht gleichzeitig mit Füllstoffpartikel-Harz-Gemisch beaufschlagt werden. Bei einem Formwerkzeug mit mehreren Injektionspunkten, wie dieses für derartige Formwerkzeuge, insbesondere, wenn diese als Pultrusion-Formwerkzeuge ausgelegt sind, die Regel ist, wird die Gesamtheit der Injektionspunkte nicht gleichzeitig mit dem Füllstoffpartikel-Harz-Gemisch beaufschlagt werden. Typischerweise befinden sich Injektionspunkte an einander bezüglich der Vorform gegenüberliegenden Seiten der Vorform. Bei Herstellung eines Hohlprofils, wie beispielsweise eines Rohres, befinden sich vorzugsweise Injektionspunkte radial außenseitig und radial innenseitig. Insbesondere ist es hierbei möglich, dass immer nur ein Injektionspunkt mit Füllstoffpartikel-Harz-Gemisch beaufschlagt ist, während die anderen in dieser Zeit der Beaufschlagung dieses einen Injektionspunktes von der Füllstoffpartikel-Harz-Gemisch-Zufuhr unterbrochen sind. Die Injektionsmenge wird volumengesteuert, so dass in jedem Injektionspunkt unabhängig von dem sich in diesem durch die Geometrie der Kavität und/oder die Dichte der darin befindlichen Vorform dieselbe Füllstoffpartikel-Harz-Gemisch-Menge injiziert werden kann, was bei einem Rohr typischerweise vorgesehen sein wird. Bei anderen Gegenständen besteht durchaus auch die Möglichkeit, durch die Volumensteuerung in unterschiedliche Injektionspunkte auch unterschiedliche Injektionsmengen zu injizieren. Kombiniert werden kann dieses mit einer Überwachung der in jeden Injektionspunkt eingespritzten Füllstoffpartikel-Harz-Gemisch-Menge. Eine Ungleichverteilung aufgrund unterschiedlicher Gegendrücke in den einzelnen Injektionspunkten macht sich sodann danke der Volumensteuerung nicht nachteilig auf die Verteilung des Füllstoffpartikel-Harz-Gemisches innerhalb der Kavität bemerkbar. Vor allem bei Pultrusion-Werkzeugen ist dieses vorteilhaft einsetzbar, da beim Strangziehen (Pultrusion) die Fließwege des Füllstoffpartikel-Harz-Gemisches in dem Formwerkzeug ohnehin gering sind und durch diese Maßnahme eine Gleichverteilung des Füllstoffpartikel-Harz-Gemisches innerhalb der Kavität eines solchen Werkzeuges gewährleistet werden kann.

Für eine solche Verteilung des Füllstoffpartikel-Harz-Gemisches auf die einzelnen Injektionspunkte wird typischerweise ein Füllstoffpartikel-Harz-Gemisch-Verteiler eingesetzt, an den das aufbereitete Füllstoffpartikel-Harz-Gemisch gefördert wird und durch welches die einzelnen Injektionspunkte des Formwerkzeuges gespeist werden. Ein solcher Füllstoffpartikel-Harz-Gemisch Verteiler kann beispielsweise nach Art eines Revolververteilers ausgelegt sein. Durchaus möglich ist auch eine Auslegung eines Füllstoffpartikel-Harz-Gemisch-Verteilers dergestalt, dass dieser Verteiler einen Sammler mit einer Füllstoffpartikel-Harz-Gemisch-Zuführung und mehreren Ausgängen umfasst. In jeden Ausgang ist ein Ventil eingeschaltet, das durch eine Steuereinrichtung entsprechend dem gewünschten Injektionstakt geöffnet bzw. geschlossen wird. Der Sammler kann bei einer solchen Auslegung eines Verteilers bereits durch den Anschluss der einzelnen Ventilleitungen an eine gemeinsame Füllstoffpartikel-Harz-Gemisch Zuführung realisiert sein.

Durchaus möglich ist, dass ein solcher Füllstoffpartikel-Harz-Gemisch-Verteiler eingangsseitig an mehrere Zuleitungen angeschlossen ist, durch die insbesondere auch unterschiedliche Harze oder Harzmischungen auch mit unterschiedlichen Füllstoffpartikeln zugeführt werden können. Dieses kann genutzt werden, wenn beispielsweise in einem Pultrusion-Werkzeug mehrere unterschiedliche Harzlagen übereinander aufgetragen oder die Längserstreckung des im Pultrusionsverfahren herzustellenden Produktes Abschnitte mit unterschiedlichen Füllstoffgehalten und/oder unterschiedlichen Harzgemischen aufweisen soll.

### Das Formwerkzeug

Eine weitere Verbesserung zu vorbekannten Verfahren gemäß dem Oberbegriff des Anspruchs 1 zum Herstellen eines faserverstärkten Kunststoffproduktes mit entweder elektrisch leitenden oder antistatischen Eigenschaften wird erreicht, wenn während der Injektion bzw. Applikation des Füllstoffpartikel-Harz-Gemisches die Vorform relativ gegenüber dem Formwerkzeug bewegt wird. Dieses hat zur Folge, dass die Fließwege des Füllstoffpartikel-Harz-Gemisches während des Imprägnierungsvorganges kurz sind. Dadurch wird die Gleichverteilung der Füllstoffpartikel in dem fließfähigen Harz durch mögliche Filtration an den Fasern der Vorform nicht, jedenfalls nicht nennenswert beeinträchtigt. Bei diesem Verfahrensaspekt kann die Vorform gegenüber dem stationären Werkzeug bewegt werden. Wird die Vorform durch das Formwerkzeug hindurchgezogen, handelt es sich bei einem solchen Formwerkzeug um einen Pultrusionsprozess. In Abhängigkeit von der Geometrie des herzustellenden faserverstärkten Kunststoffproduktes kann dasselbe auch erreicht werden, wenn die Vorform stationär ist und das Formwerkzeug bewegt wird.

Möglich ist auch eine Ausgestaltung dieses Verfahrens, dass die Vorform gegenüber dem Formwerkzeug bewegt wird und auch das Formwerkzeug nicht stationär ist, sondern die Bewegung der Vorform überlagert, beispielsweise durch eine Hin- und Herbewegung, entlang der Bewegungsachse der Vorform. Auch eine Drehung des Formwerkzeuges um die Vorform, während diese durch das Formwerkzeug hindurchgezogen wird, ist möglich.

Wenn vorstehend von einem bewegten Formwerkzeug gesprochen worden ist, schließt dieses Ausgestaltungen ein, bei denen das Formwerkzeug selbst stationär, jedoch dessen Injektionspunkte gegenüber der Vorform bewegt werden.

Bei einer Füllstoffpartikel-Harz-Gemisch-Injizierung in die Formkavität, bei der Vorform und Formwerkzeug relativ gegeneinander bewegt werden, können, wenn Injektionspunkte in Bewegungsrichtung hintereinander angeordnet sind, Ko-Extrusionen vorgenommen werden, sodass ein aus vorderen Injektionspunkten appliziertes Harzgemisch durch das in Bewegungsrichtung dahinter angeordneten Injektionspunkte ausgegebenen Mittel, beispielsweise ebenfalls ein Harzgemisch anderer Zusammensetzung oder mit anderen Füllstoffpartikeln, überzogen wird. Die dem jeweilig zu applizierenden Mittel zugeordneten Injektionspumpen sind an unterschiedliche Zufuhren angeschlossen. Gleiches lässt sich auch erreichen, wenn aus ein und denselben Injektionspunkten zunächst ein erstes Mittel, beispielsweise ein Füllstoffpartikel-Harz-Gemisch appliziert wird, während zu einem anderen Zeitpunkt aus denselben Injektionspunkten ein zweites Mittel, beispielsweise ein solches zum Ausbilden einer elektrisch nicht leitenden Schicht ausgebracht wird, beispielsweise bei einer Rückbewegung des Formwerkzeuges gegenüber der Vorform. In die Zufuhr ist dann ein Verteiler eingeschaltet, der die Zufuhr der unterschiedlichen Gemischaufbereitungen schaltet.

Die vorbeschriebene Homogenität der Füllstoffpartikel-Verteilung innerhalb des Füllstoffpartikel-Harz-Gemisches nach einer Injizierung bezieht sich auf die Applikation eines bestimmten Füllstoffpartikel-Harz-Gemisches. Dieses schließt nicht aus, dass das Kunststoffprodukt mehrlagig aufgebaut ist, und dass durchaus auch Schichten in einem solchen Schichtaufbau enthalten sein können, die andere Füllstoffpartikel enthalten oder füllstoffpartikelfrei sind, letzteres beispielsweise als darin integrierte Lackschichten oder eine äußere Lackschicht. Die Vorteile eines solchen Werkzeuges, bei dem die Vorform gegenüber dem Formwerkzeug relativ bewegt wird, ist, dass dann mit ein und demselben Werkzeug in einem kontinuierlichen Prozess unterschiedliche Schichten zum Ausbilden des Kunststoffproduktes auf die Vorform appliziert werden können. Beispielsweise kann ein solches Formwerkzeug in Bewegungsrichtung der Vorform mehrere hintereinander geschaltete Injektionspunkte oder Injektionspunktgruppen aufweisen, aus denen unterschiedlicher Applikationsstoff ausgebracht wird. Mit der Auslegung eines solchen Formwerkzeuges können Werkzeugkosten, Energiekosten gespart und Produktionszeiten reduziert werden.

Zur Verbesserung der bei einer Gleichverteilung der Füllstoffpartikel in dem Harz-Gemisch während der Applikation des Füllstoffpartikel-Harz-Gemisches ist vorgesehen, dass das Formwerkzeug - das Injektionswerkzeug - temperiert ist, typischerweise zwischen 30° C und 80° C. Ziel der Temperierung ist es, die Viskosität des zugeführten fließfähigen Harzgemisches zu senken bzw. in der zugeführten Viskosität zu belassen, um eine Imprägnierung (Tränkung) der Fasern der Vorform zu optimieren bei gleichzeitiger möglichst homogener Verteilung der darin enthaltenen Füllstoffpartikel.

Noch eine weitere Verbesserung lässt sich erreichen, wenn anstelle oder zusätzlich auch die Vorform temperiert wird. Dann bleibt die Viskosität des zugeführten Füllstoffpartikel-Harz-Gemisches auch bei in Kontakttreten mit der Vorform erhalten und wird an der bezüglich der Temperatur des Harzgemisches nicht wieder erhöht.

Die Injektionspunkte haben typischerweise einen konischen oder zylindrischen Zulauf. Auch ein tropfenförmiges Design ist möglich.

### Kombination der vorbeschriebenen Aspekte

Besonders vorteilhaft ist ein Verfahren bzw. eine Anlage zum Herstellen eines faserverstärkten Kunststoffproduktes, bei dem zumindest zwei der drei vorstehend angesprochenen Verbesserungen (Aspekte) miteinander kombiniert sind. Vorteilhaft lässt sich die Gesamtheit dieser Aspekte im Zusammenhang mit einem Pultrusion-Werkzeug einsetzen, beispielsweise um Rohre herzustellen.

Wenn als Füllstoffpartikel elektrisch leitende Partikel eingesetzt werden, können hierfür die für solche Zwecke an sich bekannten elektrisch leitenden Füllstoffe, wie beispielsweise Carbonnanotubes (Single- oder Multiwall Nanotubes), Rußpartikel oder andere ansonsten hierfür vorgesehene Partikel oder auch eine Kombination verschiedener elektrisch leitender Füllstoffpartikel verwendet werden. Vorteilhaft ist der Einsatz von Carbonnanotubes - gleich, welcher Ausgestaltung - vor allem im Zusammenhang mit einer Einspritzung eines Harz-Gemisches mit derartigen Füllstoffpartikeln bei Herstellung von Pultrusion-Produkten, da sich die Carbonnanotubes aufgrund der Relativbewegung der Injektionspunkte gegenüber der Vorform in gewisser Weise ausrichten werden, was eine elektrische Leitfähigkeit vor allem in Längsrichtung eines solchen Produktes begünstigt.

Vorteile und Weiterbildungen der Erfindung ergeben sich auch aus der nachfolgenden Beschreibung von Ausführungsbeispielen unter Bezugnahme auf die beigefügten Figuren. Es zeigen:
- **Fig. 1:**: eine schematisierte Darstellung einer Anlage zum Herstellen eines faserverstärkten Kunststoffproduktes und
- **Fig. 2:**: eine schematisierte Darstellung einer weiteren Anlage zum Herstellen eines faserverstärkten Kunststoffproduktes.

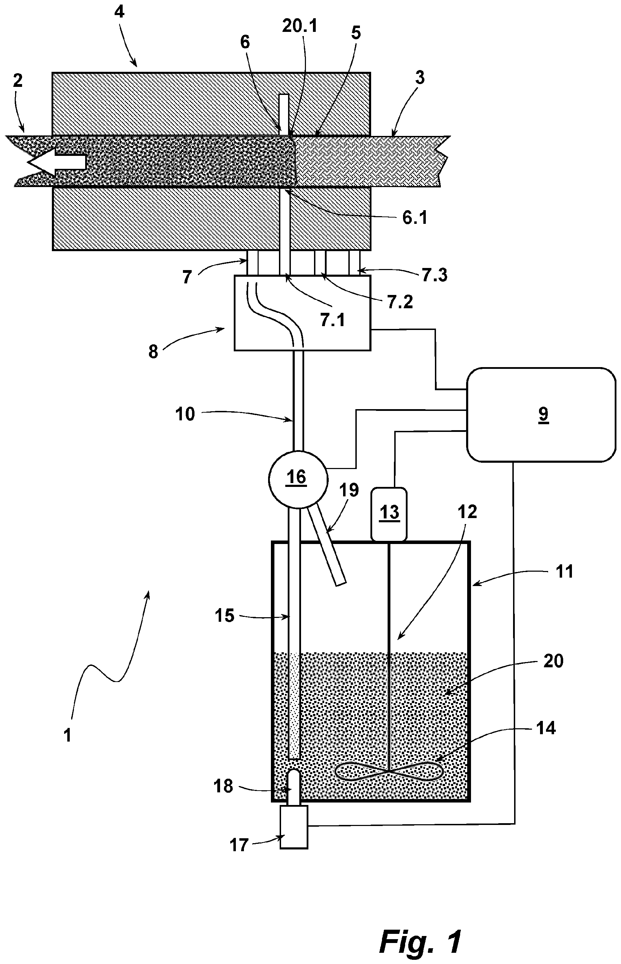

Figur 1 zeigt eine Anlage 1 zum Herstellen eines faserverstärkten Kunststoffproduktes. Bei dem fertigen faserverstärkten Kunststoffprodukt handelt es sich um ein Rohr 2. Bei der Anlage handelt es sich um eine Pultrusionanlage (Strangziehanlage), in der das faserverstärkte Rohr 2 in einem Endlosprozess hergestellt wird. Gezeigt ist von der Anlage 1 lediglich derjenige Bestandteil, in dem das Harz der schlauchförmigen Vorform 3 in einem Formwerkzeug 4 zugeführt wird. Die schlauchförmige Vorform 3 aus geeigneten Fasern, typischerweise zu einem textilen Verbund gewirkten Fasern, wird in der in der Figur mit dem Blockpfeil angegebenen Richtung durch das Formwerkzeug 4 mit nicht näher dargestellten Mitteln durchgezogen. Der Einfachheit halber ist in der Figur ein Kern, auf dem die Vorform 3 sitzt, nicht dargestellt. Dieser Kern definiert den Innendurchmesser des zu erstellenden Rohres 2. Das Formwerkzeug 4 verfügt über mehrere, bei dem dargestellten Ausführungsbeispiel vier Injektionspunkte, die umfänglich in dem Formkanal 5 des Formwerkzeuges 4, durch den die Vorform 3 hindurchgezogen wird, angeordnet sind. In der Figur sind beispielhaft zwei einander in Bezug auf die Längsachse des Formkanals 5 gegenüberliegende Injektionspunkte 6, 6.1 gezeigt. Die beiden anderen Injektionspunkte sind mit einem Winkelabstand von 90° zu den gezeigten angeordnet. Die in den Formkanal 5 mündenden Injektionspunkte 6, 6.1 des Formwerkzeuges 4 sind jeweils an einen eigenen Anschluss 7, 7.1, 7.2, 7.3 angeschlossen, über welche Anschlüsse 7, 7.1, 7.2, 7.3 jeder Injektionspunkt 6, 6.1 mit Harz bzw. einem Harz-Gemisch beaufschlagt wird. Die Verbindung des Anschlusses 7 ist nur zu dem Injektionspunkt 6 gezeigt. Die Fluidverbindungen zwischen den Anschlüssen 7.1, 7.2, 7.3 und den jeweiligen Anschlüssen sind der Einfachheit halber nicht dargestellt. Neben den vorbeschriebenen Injektionspunkten, die im Bezug die Vorform 3 außenseitig angeordnet sind, verfügt das Formwerkzeug 4 ebenfalls über innenliegende Injektionspunkte. Diese sind der Einfachheit halber in der Figur nicht dargestellt.

Ergänzend oder auch anstelle der in der Figur beispielhaft gezeigten Ausgestaltung kann eine Injektion auch vom Kern und somit von innen heraus stattfinden. Die Injektionspunkte können radial oder longitudinal in Pultrusionsrichtung verteilt angeordnet sein.

Die Anschlüsse 7, 7.1, 7.2, 7.3 des Formwerkzeuges 4 sind an einen Verteiler 8 angeschlossen. Der Verteiler 8 des dargestellten Ausführungsbeispiels ist nach Art eines Revolververteilers ausgelegt, und zwar dergestalt, dass jeweils nur ein Anschluss 7, 7.1, 7.2 oder 7.3 des Formwerkzeuges 4 mit dem in den Formkanal 5 als Kavität zu injizierendem Harz bzw. Harzgemisch beaufschlagt ist. Zur Taktung der Harzzufuhr an die einzelnen Anschlüsse 7, 7.1, 7.2, 7.3 und damit an die einzelnen Injektionspunkte 6, 6.1 des Formwerkzeuges 4 dient eine Steuereinrichtung 9, an die der Verteiler 8 angeschlossen ist.

Der Verteiler 8 ist bei dem dargestellten Ausführungsbeispiel eingangsseitig an eine Harz- bzw. Harz-Gemisch-Zufuhr 10 angeschlossen. Durchaus möglich ist es, dass an den Verteiler 8 auch mehrere Harz-Gemisch-Zufuhren angeschlossen sind, durch die unterschiedliche Harzgemische appliziert werden können. Diese können sich beispielsweise durch ihren Füllstoffpartikelanteil voneinander unterscheiden. Hierdurch kann die Leitfähigkeit in dem herzustellenden Rohr 2 in radialer Richtung sowie in Längserstreckung unterschiedlich ausgebildet werden.

Aufbereitet wird das zu injizierende Füllstoffpartikel-Harz-Gemisch 20 in einem Aufbereitungsbehälter 11. Bei dem Aufbereitungsbehälter 11 handelt es sich um einen Druckbehälter. Die Aufbereitung erfolgt in einem Überdruckmilieu. Der Einfachheit halber sind die Druckanschlüsse in der Figur nicht dargestellt. Des Weiteren sind der Einfachheit halber die notwendigen Öffnungen nicht dargestellt, über die Rohharz und die Füllstoffpartikel in den Aufbereitungsbehälter 11 eingebracht werden. Dieses kann über Schleusen vorgenommen werden. Möglich ist auch die Auslegung des Aufbereitungsbehälters 11 mit einer Öffnungsklappe, wenn ein Befüllen desselben ohne Innendruck erfolgen soll. In dem Aufbereitungsbehälter 11 befindet sich ein Rührwerk 12, angetrieben von einem Elektromotor 13. Das Rührwerk 12 ist in der Figur schematisiert dargestellt. Bei dem dargestellten Ausführungsbeispiel verfügt das Rührwerk über ein flügelartiges Mischwerkzeug 14. Mit dem Mischwerkzeug 14 wird das in dem Aufbereitungsbehälter 11 enthaltene Harz samt Füllstoffpartikeln mit Energiezufuhr gemischt, damit die Füllstoffpartikel darin homogenisiert und dispergiert sind. Bei einem solchen Mischen kann sich ein Mischthrombus ausbilden. Die eingebrachte Energie wird im Hinblick auf den damit erfolgenden Wärmeeintrag kontrolliert. Der Wärmeeintrag darf nicht zu hoch sein, damit eine Vernetzung und damit ein Aushärten des Harzes nicht beginnt.

Bei dem dargestellten Ausführungsbeispiel handelt es sich bei den Füllstoffpartikeln, die dem Harz beigemengt und in dem Aufbereitungsbehälter 11 mit diesem vermischt werden, um elektrisch leitende Partikel, beispielsweise sogenannte Carbonnanotubes.

Über eine Steigleitung 15, die bis in den bodennahen Bereich des Aufbereitungsbehälters 11 mit ihrer Mündung hineinreicht, kann aus dem Aufbereitungsbehälter 11 Füllstoffpartikel-Harz-Gemisch abgezogen bzw. ausgegeben werden. Um dieses zu kontrollieren, ist in einem in die Steigleitung 15 eingeschalteten oder an diese angeschlossenen Kontrollmodul 16 ein Ausgabeventil (nicht dargestellt) eingebracht. Das Kontrollmodul 16 ist ebenfalls an die Steuereinrichtung 9 angeschlossen. Das Kontrollmodul 16 verfügt neben dem Ausgabeventil zudem über eine Qualitätskontrolleinrichtung, mit der die Gleichverteilung der Füllstoffpartikel in dem Harz kontrolliert werden kann. Bei dem dargestellten Ausführungsbeispiel nutzt man hierfür die elektrische Leitfähigkeit des Füllstoffpartikel-Harz-Gemisches, und zwar in zwei Richtungen. Die elektrische Leitfähigkeit wird zum einen in Förderrichtung und zum anderen quer dazu erfasst. Auf diese Weise erhält man eine qualitativ hochwertige Aussage über die Gleichverteilung der Füllstoffpartikel in dem Gemisch. Ziel ist es, dass die Füllstoffpartikel in engen Toleranzgrenzen eine gleichbleibend gute Gleichverteilung und Dispersion in dem Harz aufweisen.

Zur Unterstützung der Gleichverteilung der Füllstoffpartikel in dem Harz befindet sich in dem Aufbereitungsbehälter 11 ein Ultraschallgeber 17 mit einer Sonotrode 18 als Schallkopf. Die Sonotrode 18 ist mit ihrem schallabgebenden Abschnitt auf die Eingangsmündung der Steigleitung 15 gerichtet. Dadurch erfährt das Füllstoffpartikel-Harz-Gemisch unmittelbar vor Einströmen in die Steigleitung eine Ultraschallbehandlung, durch die die Dispergierung der darin enthaltenen Füllstoffpartikel nochmals verbessert wird und unter Umständen noch aneinander anhaftende Füllstoffpartikel voneinander gelöst werden. Dieses unterstützt die gewünschte Qualität der Gleichverteilung der Füllstoffpartikel in dem Harz.

Das in dem Kontrollmodul 16 angeordnete Ausgabeventil ist ein Dreiwegeventil, durch das in einer ersten Schaltstellung der Ausgang der Steigleitung 15 verschlossen sein kann. In einer zweiten Schaltstellung ist die Steigleitung 15 mit der Harzzufuhr 10 verbunden. Dieses Ventil kann ferner in eine Stellung gebracht werden, mit der der Ausgang der Steigleitung 15 mit einer Rückführung 19 verbunden ist, um über die Steigleitung 15 aus dem Aufbereitungsbehälter 11 abgezogenes Füllstoffpartikel-Harz-Gemisch in diesen zurückzuführen. In diese Stellung wird das Ausgabeventil gebracht, wenn durch die Kontrolleinrichtung in dem Kontrollmodul 16 festgestellt worden ist, dass die Gleichverteilung der Füllstoffpartikel in dem Harz nicht den gewünschten Anforderungen entspricht. Hierdurch ist gewährleistet, dass in die Harzzufuhr 10 und damit in den Verteiler 8 und das Formwerkzeug 4 nur ein Füllstoffpartikel-Harz-Gemisch gebracht wird, welches den Qualitätsanforderungen genügt.

Die Auswertung der Messergebnisse der in dem Kontrollmodul 16 enthaltenen Kontrolleinrichtung erfolgt in der Steuereinrichtung 9. Durch diese ist auch das Ausgabeventil angesteuert. Bei nicht hinreichender Homogenisierung und Dispergierung kann durch die Steuereinrichtung 9 auch Einfluss auf die Mischaktoren - das Rührwerk 12 und den Ultraschallgeber 17 - genommen werden, weshalb auch diese an die Steuereinrichtung 9 angeschlossen sind.

Bereits beim Aufbereiten des Harzes mit den Füllstoffpartikeln zum Bereitstellen des fließfähigen Füllstoffpartikel-Harz-Gemisches kann die Kontrolleinrichtung des Kontrollmoduls genutzt werden, und zwar zur Überwachung des Durchmischungserfolges. Die Rückführung von Füllstoffpartikel-Harz-Gemisch in den Aufbereitungsbehälter 11 kann zudem durch den über die Steigleitung 15 und die Rückführung 19 gebildeten Kreislauf die Durchmischung innerhalb des Aufbereitungsbehälters 11 verbessern.

Bei hinreichender Gleichverteilung der Füllstoffpartikel in dem Harz wird die Fluidverbindung zwischen der Steigleitung 15 und der Harzzufuhr 10 durch das Kontrollventil hergestellt, sodass das injektionsfertige Füllstoffpartikel-Harz-Gemisch den Verteiler 8 beaufschlagt. Entsprechend dem vorgegebenen Takt wird das Füllstoffpartikel-Harz-Gemisch, gesteuert durch den Verteiler 8, den Anschlüssen 7, 7.1, 7.2, 7.3 zugeführt, sodass diese nacheinander mit Füllstoffpartikel-Harz-Gemisch beaufschlagt werden und dieses an den jedem Anschluss 7, 7.1, 7.2, 7.3 zugeordneten Injektionspunkt 6, 6.1 das Gemisch in den Formkanal 5 und die darin enthaltene Vorform 3 injiziert wird. Das die Vorform 2 imprägnierende Füllstoffpartikel-Harz-Gemisch, was diese auch außenseitig umgibt, ist in der Figur mit dem Bezugszeichen 20.1 kenntlich gemacht. Vor dem Hintergrund der Relativbewegung zwischen der Vorform 3 und den Injektionspunkten 6, 6.1 sind die Fließwege des Füllstoffpartikel-Harz-Gemisches 20 innerhalb des Formkanals 5 sehr kurz, sodass Filtrationseffekte, die zu einer Ungleichverteilung der Füllstoffpartikel im Harz führen könnten, auf ein Minimum reduziert sind. Die Einspritzung des Füllstoffpartikel-Harz-Gemisches über jeden Injektionspunkt 6, 6.1 in den Formkanal 5 erfolgt über den in dem Aufbereitungsbehälter 11 eingestellten Arbeitsdruck.

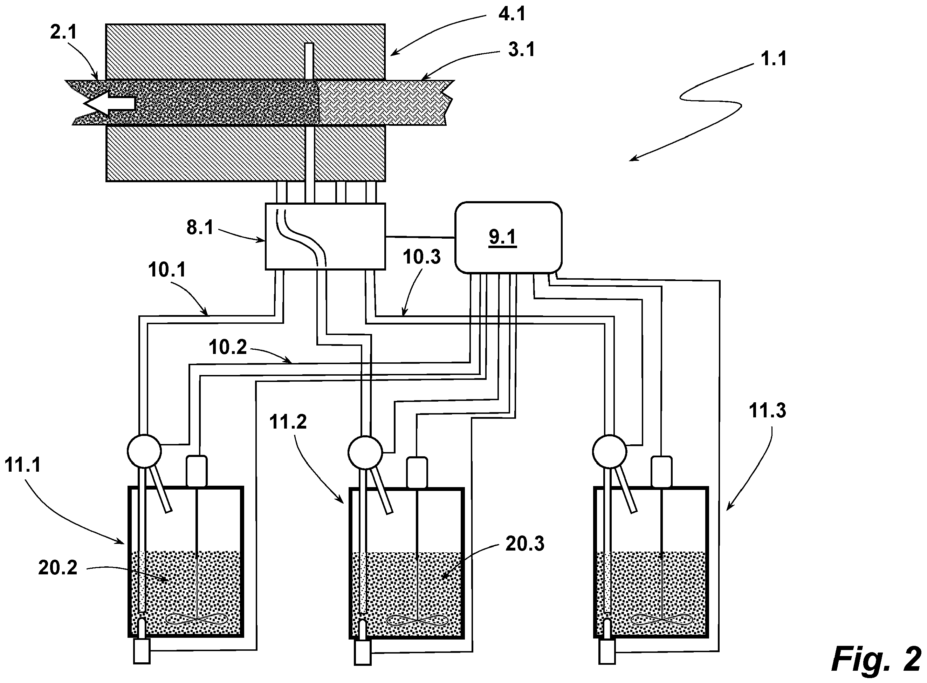

Figur 2 zeigt eine weitere Anlage 1.1 zum Herstellen eines faserverstärkten Kunststoffproduktes. Die Anlage 1.1 ist prinzipiell aufgebaut und wird betrieben wie die Anlage 1 der Figur 1. Die Anlage 1.1 unterscheidet sich von der Anlage 1 allein dadurch, dass an den Verteiler 8.1 mehrere Harzzufuhren 10.1, 10.2, 10.3, angeschlossen sind. Die einzelnen Harzzufuhren 10.1, 10.2, 10.3 sind jeweils aufgebaut wie die zur Figur 1 beschriebene Harzzufuhr 10. In dem jeweiligen Aufbereitungsbehälter 11.1, 11.2, 11.3 wird ein unterschiedliches Harzgemisch aufbereitet. In den Aufbereitungsbehältern 11.1 und 11.2 wird ein Füllstoffpartikel-Harz-Gemisch 20.1, 20.2 aufbereitet, wobei in dem Aufbereitungsbehälter 11.1 als Füllstoffpartikel elektrisch leitende Füllstoffpartikel in die fließfähige Harzmasse eingemischt werden. Als Füllstoffpartikel werden in dem Aufbereitungsbehälter 11.2 dielektrischen Partikel eingemischt. Der Aufbereitungsbehälter 11.3 dient zur Bereitstellung eines Harzgemisches ohne spezifische Füllstoffpartikel. Die Aufbereitungsbehälter 11.1, 11.2, 11.3 sind mit ihren Aggregaten an eine gemeinsame Steuereinrichtung 9.1 angeschlossen und sind von dieser angesteuert, ebenso wie der Verteiler 8.1.

Mit der Anlage 1.1 kann mit dem Formwerkzeug 4.1 aus einer Vorform 3.1 ein Rohr 2.1 mit unterschiedlichen Harzlagen hergestellt werden.

Die Erfindung ist vorstehend anhand von ausgewählten Ausführungsbeispielen beschrieben worden. Ohne den Umfang der geltenden Ansprüche zu verlassen, ergeben sich für einen Fachmann zahlreiche weitere Möglichkeiten, diese umzusetzen, ohne dass diese im Rahmen dieser Ausführungen im Einzelnen näher erläutert werden müssten.

### Bezugszeichenliste

1, 1.1 Anlage
2, 2.1 Rohr
3.3.1 Vorform
4, 4.1 Formwerkzeug
5 Formkanal
6, 6.1 Injektionspunkt
7, 7.1, 7.2, 7.3 Anschluss
8, 8.1 Verteiler
9, 9.1 Steuereinrichtung
10, 10.1, 10.2, 10.3 Harzzufuhr
11, 11.1, 11.2, 11.3 Aufbereitungsbehälter
12 Rührwerk
13 Elektromotor
14 Mischwerkzeug
15 Steigleitung
16 Kontrollmodul
17 Ultraschallgeber
18 Sonotrode
19 Rückführung
20, 20.1, 20.2, 20.3 Füllstoffpartikel-Harz-Gemisch

## Patentansprüche

1. Verfahren zum Herstellen eines faserverstärkten Kunststoffproduktes (2, 2.1), umfassend die folgenden Schritte:
a) Bereitstellen einer aus Fasern gebildeten Vorform (3, 3.1) und Einbringen der Vorform (3, 3.1) in ein Formwerkzeug (4, 4.1),
b) Bereitstellen eines fließfähigen Füllstoffpartikel-Harz-Gemisches (20, 20.2, 20.3) zum Injizieren desselben in das die Vorform (3, 3.1) enthaltende Formwerkzeug (4),
c) Zuführen des Füllstoffpartikel-Harz-Gemisches (20, 20.2, 20.3) an den oder die Injektionspunkte (6, 6.1) des die Vorform (3, 3.1) enthaltenden Formwerkzeuges (4, 4.1) und
d) Aushärten der mit dem Füllstoffpartikel-Harz-Gemisch (20, 20.2, 20.3) getränkten Vorform (3, 3.1),
wobei zum Bereitstellen des Füllstoffpartikel-Harz-Gemisches (20, 20.2, 20.3) eine Aufbereitung von in einem fließfähigen Harz befindlichen Füllstoffpartikeln mit Energiezufuhr erfolgt, bei der die Füllstoffpartikel in dem fließfähigen Harz mit einem Scherkräfte einbringenden, mechanischen Rührwerk (12) zur Homogenisierung und Dispergierung der Füllstoffpartikel in dem Harz gemischt werden und zusätzlich das Füllstoffpartikel-Harz-Gemisch (20, 20.2, 20.3) zur Feindispergierung mit Ultraschall beschallt wird, **dadurch gekennzeichnet, dass** die Qualität des Füllstoffpartikel-Harz-Gemisches (20. 20.2, 20.3) in Bezug auf eine Gleichverteilung der Füllstoffpartikel in dem Füllstoffpartikel-Harz-Gemisch (20, 20.2, 20.3) bei der Zufuhr desselben an das Formwerkzeug (4, 4.1) überwacht wird und dass bei Feststellen einer nicht hinreichenden Füllstoffpartikelgleichverteilung die Zufuhr des Füllstoffpartikel-Harz-Gemisches (20, 20.2, 20.3) an das Formwerkzeug (4, 4.1) gestoppt oder unterbrochen wird.

2. Verfahren nach Anspruch 1, **dadurch gekennzeichnet, dass** das Füllstoffpartikel-Harz-Gemisch bei dem Vorgang des Ausgebens des Gemisches aus einem Aufbereitungsbehälter (11, 11.1, 11.2)der Ultraschallbeschallung ausgesetzt wird.

3. Verfahren nach Anspruch 1 oder 2, **dadurch gekennzeichnet, dass** die Qualitätskontrolle anhand zumindest einer physikalischen Eigenschaft des Füllstoffpartikel-Harz-Gemisches (20, 20.2, 20.3) durchgeführt wird, insbesondere anhand seiner thermischen und/oder elektrischen Leitfähigkeit und/oder einer oder mehrerer seiner optischen Eigenschaften.

4. Verfahren nach einem der Ansprüche 1 bis 3, **dadurch gekennzeichnet, dass** bei Feststellen einer nicht hinreichenden Füllstoffpartikelgleichverteilung das Füllstoffpartikel-Harz-Gemisch (20, 20.2, 20.3) in die Aufbereitung zurückgeführt wird.

5. Verfahren nach einem der Ansprüche 1 bis 4, **dadurch gekennzeichnet, dass** das Füllstoffpartikel-Harz-Gemisch (20, 20.2, 20.3) an mehrere Injektionspunkte (6, 6.1) des Formwerkzeuges (4) gefördert wird und dass die Injektionspunkte (6, 6.1) des Formwerkzeuges (4, 4.1) taktweise mit Füllstoffpartikel-Harz-Gemisch (20, 20.2, 20.3) beaufschlagt werden dergestalt, dass diese nicht gleichzeitig mit Füllstoffpartikel-Harz-Gemisch (20, 20.2, 20.3) beaufschlagt werden.

6. Verfahren nach Anspruch 5, **dadurch gekennzeichnet, dass** in einem Takt immer nur ein Injektionspunkt (6, 6.1) mit Füllstoffpartikel-Harz-Gemisch (20, 20.2, 20.3) beaufschlagt wird.

7. Verfahren nach einem der Ansprüche 1 bis 6, **dadurch gekennzeichnet, dass** während der Applikation des Füllstoffpartikel-Harz-Gemisches (20, 20.2, 20.3) in dem Formwerkzeug (4, 4.1) die Vorform (3, 3.1) und das Formwerkzeug (4, 4.1) in Längserstreckung des herzustellenden faserverstärkten Kunststoffproduktes (2, 2.1) relativ gegeneinander bewegt werden.

8. Anlage zum Herstellen eines faserverstärkten Kunststoffproduktes (2, 2.1), insbesondere eines endlos hergestellten faserverstärkten Kunststoffproduktes in einem Formwerkzeug (4, 4.1) mit
a) einem Formwerkzeug (4, 4.1) zur Aufnahme einer aus Fasern gefertigten Vorform (3, 3.1),
b) einer Einrichtung zum Aufbereiten eines Füllstoffpartikel-Harz-Gemisches (20, 20.2, 20.3) und
c) einer Zuführung zum Fördern des aufbereiteten Füllstoffpartikel-Harz-Gemisches (20, 20.2, 20.3) an den oder die Injektionspunkte (6, 6.1) des Formwerkzeuges (4, 4.1),
wobei die Aufbereitungseinrichtung einen Aufbereitungsbehälter (11, 11.1, 11.2) mit einem Rührwerk (12) und mit einer darin angeordneten, außerhalb der Bewegungsbahn des Rührwerkes angeordneten Ultraschallsonotrode (18) sowie einer Ausgabe zum Ausgeben des Füllstoffpartikel-Harz-Gemisches (20, 20.2, 20.3) zwecks Zuführung an das Formwerkzeug (4, 4.1) umfasst, **dadurch gekennzeichnet, dass** der Aufbereitungseinrichtung eine Einrichtung zur Kontrolle der Gleichverteilung der Füllstoffpartikel in dem ausgabebereiten Füllstoffpartikel-Harz-Gemisch (20, 20.2, 20.3) zugeordnet ist, welche Kontrolleinrichtung zum Messen der elektrischen und/oder thermischen Leitfähigkeit und/oder einer optischen Eigenschaft des Füllstoffpartikel-Harz-Gemisches (20, 20.2, 20.3) ausgelegt ist.

9. Anlage nach Anspruch 9, **dadurch gekennzeichnet, dass** zur Ausgabe des Füllstoffpartikel-Harz-Gemisches (20, 20.2, 20.3) der Aufbereitungsbehälter (11, 11.1, 11.2) über ein an die Zuführung angeschlossenes Steigrohr (15) verfügt und dass die Ultraschallsonotrode (18) mit ihrem Schallkopf auf die Eingangsöffnung des Steigrohres (15) gerichtet ist.

10. Anlage nach Anspruch 8 oder 9, **dadurch gekennzeichnet, dass** die Kontrolleinrichtung in eine durch ein Ventil aktivierbare Rückführung (19) zum Zurückführen von Füllstoffpartikel-Harz-Gemisch (20, 20.2, 20.3) in den Aufbereitungsbehälter (11. 11.1, 11.2) eingeschaltet ist.

11. Anlage nach einem der Ansprüche 8 bis 10, **dadurch gekennzeichnet, dass** das Formwerkzeug (4, 4.1) mehrere Injektionspunkte (6, 6.1) aufweist und in die Zuführung (10, 10.1, 10.2) zum Fördern des Füllstoffpartikel-Harz-Gemisches (20, 20.2, 20.3) an das Formwerkzeug (4, 4.1) ein Füllstoffpartikel-Harz-Gemisch-Verteiler (8, 8.1) zum Beaufschlagen der einzelnen Injektionspunkte (6, 6.1) des Formwerkzeuges (4, 4.1) entsprechend einem vorgegebenen Takt eingeschaltet ist, durch welchen Verteiler (8) die Gesamtheit der Injektionspunkte (6, 6.1) des Formwerkzeuges (4, 4.1) nicht gleichzeitig mit Füllstoffpartikel-Harz-Gemisch (20, 20.2, 20.3) beaufschlagt ist.

12. Anlage nach Anspruch 11, **dadurch gekennzeichnet, dass** der Füllstoffpartikel-Harz-Gemisch-Verteiler (8, 8.1) nach Art eines Revolververteilers ausgelegt ist.

13. Anlage nach Anspruch 11 oder 12, **dadurch gekennzeichnet, dass** das Formwerkzeug (4, 4.1) ein Pultrusionswerkzeug ist, insbesondere zum Herstellen von Rohren.

## Claims

1. Method for manufacturing a fibre-reinforced plastic product (2, 2.1), comprising the following steps:
a) providing a preform (3,3.1) formed from fibres, and introducing the preform (3, 3.1) into a mould (4, 4.1),
b) providing a free-flowing mixture of filler particles and resin (20, 20.2, 20.3) for injecting this into the mould (4) containing the preform (3, 3.1),
c) conveying the mixture of filler particles and resin (20, 20.2, 20.3) to the injection point(s) (6, 6.1) of the mould (4, 4.1) containing the preform (3,.3.1), and
d) curing the preform (3, 3.1) saturated with the mixture of filler particles and resin (20, 20.2, 20.3),
wherein, in order to provide the mixture of filler particles and resin (20, 20.2, 20.3), a compounding takes place of filler particles located in a free-flowing resin, with the application of resin, wherein the filler particles are mixed in the free-flowing resin by a mechanical stirring device (12) which applies shear forces, in order to homogenise and disperse the filler particles in the resin, and, additionally, the mixture of filler particles and resin (20, 20.2, 20.3) is subjected to ultrasonics for the purpose of fine dispersion, **characterised in that** the quality of the mixture of filler particles and resin (20, 20.2, 20.3) with regard to an equal distribution of the filler particles in the mixture of filler particles and resin (20, 20.2, 20.3) being monitored during the conveying of this mixture to the mould (4, 4.1), and that, in the event of detection of an inadequately equal distribution of the filler particles, the conveying of the mixture of filler particles and resin (20, 20.2, 20.3) to the mould (4, 4.1) is stopped or interrupted.

2. Method according to claim 1, **characterised in that,** during the process of the dispensing of the mixture out of a supply container (11, 11.1, 11.2), the mixture of filler particles and resin is subjected to ultrasonics.

3. Method according to claim 1 or 2, **characterised in that** quality control is carried out on the basis of at least one physical property of the mixture of filler particles and resin (20, 20.2, 20.3), in particular on the basis of its thermal and/or electrical conductivity and/or one or more of its optical properties.

4. Method according to any one of claims 1 to 3, **characterised in that,** in the event of detection of an inadequately equal distribution of the filler particles, the mixture of filler particles and resin (20, 20.2, 20.3) will be conveyed back to the supply container.

5. Method according to any one of claims 1 to 4, **characterised in that** the mixture of filler particles and resin (20, 20.2, 20.3) is conveyed to several injection points (6, 6.1) of the mould (4), and that the injection points (6, 6.1) of the mould (4, 4.1) are subjected in a cyclic manner to the delivery of the mixture of filler particles and resin (20, 20.2, 20.3) in such a way that they are not subjected to the mixture of filler particles and resin (20, 20.2, 20.3) simultaneously.

6. Method according to claim 5, **characterised in that** in one cycle it is always only one injection point (6, 6.1) which is subjected to the mixture of filler particles and resin (20, 20.2, 20.3).

7. Method according to any one of claims 1 to 6, **characterised in that,** during the application of the mixture of filler particles and resin (20, 20.2, 20.3) in the mould (4, 4.1), the preform (3, 3.1) and the mould (4, 4.1) are moved relative to one another in the longitudinal extension of the fibre-reinforced plastic product (2, 2.1) which is to be manufactured.

8. Assembly for manufacturing a fibre-reinforced plastic product (2, 2.1), in particular of an endlessly manufactured fibre-reinforced plastic product in a mould (4, 4.1), with
a) a mould (4, 4.1) for receiving a preform (3, 3.1) prepared from fibres,
b) a device for providing a mixture of filler particles and resin (20, 20.2, 20.3), and
c) a delivery arrangement for conveying the prepared mixture of filler particles and resin (20, 20.2, 20.3) to the injection point(s) (6, 6.1) of the mould (4, 4.1),
wherein the device for providing the mixture comprises a supply container (11, 11.1, 11.2) with a stirrer (12) and an ultrasound sonotrode (18) arranged outside the movement path of the stirrer, as well as a dispenser for dispensing the mixture of filler particles and resin (20, 20.2, 20.3) for the purpose of conveyance to the mould (4, 4.1), **characterised in that** a device is assigned to the device for providing the mixture, which monitors the equal distribution of the filler particles in the mixture of filler particles and resin (20, 20.2, 20.3) which is to be dispensed, this monitoring device being configured for measuring the electrical and/or thermal conductivity and/or an optical property of the mixture of filler particles and resin (20, 20.2, 20.3).

9. Assembly according to claim 8, **characterised in that,** for the dispensing of the mixture of filler particles and resin (20, 20.2, 20.3), the supply container (11, 11.1, 11.2) is provided with a riser pipe (15), connected to the delivery system, and that the ultrasound sonotrode (18) has its transducer directed towards the intake opening of the riser pipe (15).

10. Assembly according to claim 8 or 9, **characterised in that** the monitoring device is engaged in a return arrangement (19) which can be activated by a valve, for conveying the mixture of filler particles and resin (20, 20.2, 20.3) back into the supply container (11, 11.1, 11.2).

11. Assembly according to any one of claims 8 to 10, **characterised in that** the mould (4, 4.1) comprises several injection points (6, 6.1), and, for conveying the mixture of filler particles and resin (20, 20.2, 20.3) to the mould (4, 4.1), a distributor (8, 8.1) for the mixture of filler particles and resin is integrated into the supply and feed arrangement (10, 10.1, 10.2), for subjecting the individual injection points (6, 6.1) of the mould (4, 4.1) to the mixture in accordance with a predetermined cycle, by means of which distributor (8) the total number of the injection points (6, 6.1) of the mould (4, 4.1) are not subjected to the mixture of filler particles and resin (20, 20.2, 20.3) simultaneously.

12. Assembly according to claim 11, **characterised in that** the distributor (8, 8.1) of the mixture of filler particles and resin is configured in the form of a revolver distributor.

13. Assembly according to claim 11 or 12, **characterised in that** the mould (4, 4.1) is a pultrusion mould, in particular for the manufacturing of pipes and tubes.

## Revendications

1. Procédé de fabrication d'un produit en matière plastique (2, 2.1) renforcé par des fibres comportant les étapes suivantes:
a) Mise à disposition d'une préforme (3, 3.1) constituée de fibres et introduction de la préforme (3, 3.1) dans un outil de moulage (4, 4.1).
b) Mise à disposition d'un mélange (20, 20.2, 20.3) fluidifiable de résine et de particules de charge, à injecter dans l'outil de moulage (4) contenant la préforme (3, 3.1),
c) Acheminement du mélange (20, 20.2, 20.3) de résine et de particules de charge vers le ou les points d'injection (6, 6.1) de l'outil de moulage (4, 4.1) contenant la préforme (3, 3.1) et
d) Durcissement de la préforme (3, 3.1) imbibée du mélange (20, 20.2, 20.3) de résine et de particules de charge,
la mise à disposition du mélange (20, 20.2, 20.3) de résine et de particules de charge étant réalisée, grâce à une alimentation en énergie, au moyen d'un traitement de particules de charge se trouvant dans une résine fluidifiable, lors duquel les particules de charge dans la résine fluidifiable sont mélangées à l'aide d'un agitateur (12) mécanique capable d'appliquer des forces de cisaillement afin d'homogénéiser et de disperser les particules de charge dans la résine et lors duquel le mélange (20, 20.2, 20.3) de résine et de particules de charge est de surcroît traité aux ultrasons afin d'obtenir une dispersion fine, **caractérisé en ce que** la qualité du mélange (20, 20.2, 20.3) de résine et de particules de charge est surveillée, lors de son acheminement vers l'outil de mélange (4, 4.1), pour vérifier la répartition homogène des particules de charge dans le mélange (20, 20.2, 20.3) de résine et de particules de charge, et **en ce que** l'acheminement du mélange (20, 20.2, 20.3) de résine et de particules de charge vers l'outil de moulage (4, 4.1) est arrêté ou interrompu si une répartition insuffisamment homogène des particules de charge est constatée.

2. Procédé selon la revendication 1, **caractérisé en ce que** le mélange de résine et de particules de charge est soumis à un traitement aux ultrasons au moment du processus où le mélange quitte un conteneur de traitement (11, 11.1, 11.2).

3. Procédé selon la revendication 1 ou 2, **caractérisé en ce que** le contrôle qualité est réalisé en se fondant sur au moins une caractéristique physique du mélange (20, 20.2, 20.3) de résine et de particules de charge, notamment sur sa conductibilité thermique et/ou électrique et/ou sur une ou plusieurs de ses caractéristiques optiques.

4. Procédé selon l'une des revendications 1 à 3, **caractérisé en ce que,** lorsqu'une répartition d'une homogénéité insuffisante des particules de charge est constatée, le mélange (20, 20.2, 20.3) de résine et de particules de charge est réacheminé vers le traitement.

5. Procédé selon l'une des revendications 1 à 4, **caractérisé en ce que** le mélange (20, 20.2, 20.3) de résine et de particules de charge est acheminé vers plusieurs points d'injection (6, 6.1) de l'outil de moulage (4) et que le mélange (20, 20.2, 20.3) de résine et de particules de charge arrive cadencé aux points d'injection (6, 6.1) de l'outil de moulage (4, 4.1) de sorte qu'ils ne sont pas alimentés simultanément en mélange (20, 20.2, 20.3) de résine et de particules de charge.

6. Procédé selon la revendication 5, **caractérisé en ce que** qu'au cours d'une étape cadencée, toujours un seul point d'injection (6, 6.1) est alimenté en mélange (20, 20.2, 20.3) de résine et de particules de charge.

7. Procédé selon l'une des revendications 1 à 6, **caractérisé en ce que,** pendant l'application du mélange (20, 20.2, 20.3) de résine et de particules de charge dans l'outil de moulage (4, 4.1), la préforme (3, 3.1) et l'outil de moulage (4, 4.1) sont mis en mouvement de manière relative l'un contre l'autre dans le sens longitudinal du produit à fabriquer en matière plastique (2, 2.1) renforcé en fibres.

8. Installation pour fabriquer un produit en matière plastique (2, 2.1) renforcé en fibres, notamment un produit en matière plastique renforcé en fibres fabriqué en continu dans un outil de moulage (4, 4.1) avec
a) un outil de moulage (4, 4.1) destiné à recevoir une préforme (3, 3.1) fabriquée en fibres,
b) un équipement pour traiter un mélange (20, 20.2, 20.3) de résine et de particules de charge et
c) un conduit d'alimentation pour acheminer le mélange (20, 20.2, 20.3) traité de résine et de particules de charge vers le ou les points d'injection (6, 6.1) de l'outil de moulage (4, 4.1),
lequel équipement de traitement comportant un conteneur de traitement (11, 11.1, 11.2) avec un agitateur (12) et une sonotrode (18) à ultrasons disposée en dehors de la trajectoire de l'agitateur, ainsi que d'une sortie pour délivrer le mélange (20, 20.2, 20.3) de résine et de particules de charge afin de l'acheminer vers l'outil de moulage (4, 4.1), **caractérisée en ce qu'**on adjoint à l'équipement de traitement, un équipement de contrôle de la répartition homogène des particules de charge dans le mélange (20, 20.2, 20.3) de résine et de particules de charge prêt à être déversé, lequel équipement de contrôle étant conformé afin de mesurer la conductibilité électrique et/ou thermique et/ou une caractéristique optique du mélange (20, 20.2, 20.3) de résine et de particules de charge.

9. Installation selon la revendication 9, **caractérisée en ce que** le conteneur de traitement (11, 11.1, 11.2) dispose, afin de délivrer le mélange (20, 20.2, 20.3) de résine et de particules de charge, d'un conduit ascendant (15) raccordé à l'alimentation et que la sonotrode (18) à ultrasons avec sa tête vibratoire est dirigée sur l'ouverture d'entrée du conduit ascendant (15).

10. Installation selon la revendication 8 ou 9, **caractérisée en ce que** l'équipement de contrôle est intégré dans un conduit de retour (19) activable par une vanne, destiné à restituer le mélange (20, 20.2, 20.3) de résine et de particules de charge dans le conteneur de traitement (11, 11.1, 11.2).

11. Installation selon l'une des revendications 8 à 10, **caractérisée en ce que** l'outil de moulage (4, 4.1) présente plusieurs points d'injection (6, 6.1) et **en ce qu'**un répartiteur (8, 8.1) de mélange de résine et de particules de charge, destiné à alimenter, selon une cadence préalablement définie, les différents points d'injection (6, 6.1) de l'outil de moulage (4, 4.1 ), est intégré au conduit d'alimentation (10, 10.1, 10.2) pour acheminer le mélange (20, 20.2, 20.3) de résine et de particules de charge vers l'outil de moulage (4, 4.1), lequel répartiteur (8) assure l'alimentation non simultanée en mélange (20, 20.2, 20.3) de résine et de particules de charge sur l'ensemble des points d'injection (6, 6.1) de l'outil de moulage (4, 4.1).

12. Installation selon la revendication 11, **caractérisée en ce que** le répartiteur (8, 8.1) de mélange de résine et de particules de charge est conformé à la manière d'un barillet de révolver.

13. Installation selon la revendication 11 ou 12, **caractérisé en ce que** l'outil de moulage (4, 4.1) est un outil de pultrusion, notamment destiné à la fabrication de tubes.
